# EUROPEAN PATENT APPLICATION

(11) **EP 2 720 184 A1**
(43) Date of publication of application: **16.04.2014**
(21) Application number: 13187987.6
(22) Date of filing: 09.10.2013
(51) Int. Cl.: G06Q 30/02

(54) **Computer-implemented system and method for tying symbolic content to a physical locality in a user-performable activity scenario**

(30) Priority: 09.10.2012 US 201261711720 P; 01.10.2013 US 201314043759
(71) Applicant: GroundSpeak, Inc., Seattle, Washington 98103 (US)
(72) Inventor: Irish, Jeremy, Seattle, WA 98103 (US)
(74) Representative: Curley, Donnacha John

(57) **Abstract**

A computer-implemented system and method for tying symbolic content (15, 17, 19, 21, 34) to a physical locality in a user-performable activity scenario is provided. A computer-executable script for an activity scenario is stored. The activity scenario includes a plurality of user-performable written instructions and at least one requirements within the instructions. The at least one requirement includes both a presence of a mobile device (12, 30) and an acquisition of readable symbolic content (15, 17, 19, 21, 34) by the mobile device (12, 30) while both within a geolocationally-defined physical area (13). The computer-executable script is executed on the mobile device (12, 30) by displaying the written instructions in the activity scenario to a user (11) and determining fulfillment of the written instructions by the user (11). Upon satisfactory completion the written instructions in the activity scenario, as confirmed by the mobile device (12, 30), an incentive is awarded to the user (11).

## Description

### Field

The present invention relates in general to scenarios involving symbolic content and, in particular, to a computer-implemented system and method for tying symbolic content to a physical locality in a user-performable activity scenario.

### Background

Companies often sponsor promotional events as part of an advertising campaign to get consumers actively involved with their products and services, and the way that companies promote their goods and services to consumers continues to evolve as advances in technology open up new media channels for providing advertising to the consumers. Traditionally, companies relied upon a single media channel in delivering advertising to consumers, for instance, by placing hardcopy advertisements in traditional print media, airing commercials on the radio and television, and, more recently, publishing Web sites online. However, single advertising media channels are passive and limit the degree to which consumers can actively interact with a company. Conventional approaches of embedding company contact information, such as a toll-free number or a hyperlink to an informational Web site, still require the consumers to take the additional step of dialing the telephone number or clicking on the hyperlink, a step that is often overlooked as too bothersome or simply ignored.

Recently, smart phones and similar mobile computing devices have opened up yet another advertising media channel with the potential to avoid the inertia of passive advertising. Unlike traditional media channels, smart phones provide users with ever-improving interconnectivity and on-the-go access to public computer networks, especially the Internet, and the resources of the Web. Moreover, smart phones are often equipped with built-in digital cameras or wireless transceivers that allow users to capture imagery or wirelessly receive data, including advertising, that can be interpreted by onboard applications. For example, QR ("Quick Response") codes are printed two-dimensional encodings that can be read by a smart phone's built-in digital camera. Advertisers have embraced QR codes, which can be printed or placed on any surface, such as brochures, product labels, menus, signage and so forth. Due to their physical size, QR codes can only store a relatively modest amount of data and, as a result, QR codes frequently embed hyperlinks that automatically direct a Web browser to a company's Web site, where the smart phone user can then get more information.

Companies would like to see consumers be more actively involved with their products and services, and promotional events, such as contests and product give-aways, reward consumers for their efforts with tangible incentives and awards. Notwithstanding, although serving Web pages to smart phone users helps to provide more information to consumers than would otherwise be available from printed advertising alone, QR code-triggered Web pages still only shift the content delivery platform from print media to a Web browser executing on the consumer's smart phone. As a result, smart phone users remain passive viewers, and the level of their real world interaction with the company remains limited or altogether non-existent. Promotional Web sites, for instance, may require online user interaction, such as navigating a Web site, answering questions, providing personal data, or even playing an online game, but the level of consumer involvement nevertheless remains strictly Web browser based. Real world factors, such as where the smart phone user is located at the moment or how quickly the user participates in a promotion, are not considered and consequently the user experience is the same for all smart phone users, no matter where or who they are, or what they may be doing at a particular point in time.

Therefore, a need remains for an approach to providing more interactive experiences in promotional activities for users of smart phones and similar mobile computing devices that requires real world inputs and activity engagements.

### Summary

An activity scenario can be created through an executable script that can be run by an application executing on a mobile computing device. The activity scenario can be performed by a user of the mobile computing device, who is required by the written instructions in the activity scenario to be at or within predetermined physical locations or areas, while also having read or received an encoding of symbolic content. Successfully acquiring the correct symbolic content and being in the predetermined physical location or area is a condition for satisfying the requirement. Thus, companies or other interests who wish to involve participants in undertaking promotional activities are able to use activity scenarios that consumers can perform with real world inputs.

One embodiment provides a computer-implemented system and method for tying symbolic content to a physical locality in a user-performable activity scenario. A computer-executable script for an activity scenario is stored. The activity scenario includes a plurality of user-performable written instructions and at least one requirement within the instructions. The at least one requirement includes both a presence of a mobile device and an acquisition of readable symbolic content by the mobile device while both within a geolocationally-defined physical area. The computer-executable script is executed on the mobile device by displaying the written instructions in the activity scenario to the user and determining fulfillment of the written instructions by the user. A non-transitory encoding of symbolic content is received with the mobile device upon physical command of the user and the symbolic content from the received non-transitory encoding is interpreted. Geolocational coordinates are obtained using the mobile device for a physical location at which the encoding was acquired. The geolocational coordinates and the interpreted symbolic content are respectively validated against the geolocationally-defined physical defined area and the readable symbolic content that are both comprised in the at least one requirement. Upon satisfactory completion the written instructions in the activity scenario, as confirmed by the mobile device, an incentive is awarded to the user.

A further embodiment provides a computer-implemented method for tying an image to a physical locality in a user-performable activity scenario. Instructions to a mobile device for an activity scenario that includes a plurality of pairs of images associated with geolocationally-defined physical areas are provided. A location of a user associated with the mobile device within one of the geolocationally-defined physical areas is identified. An image captured on the mobile device by the user is received. The received image is matched against the image associated with that geolocationally-defined physical area. A further one of the instructions for the activity scenario is received when the received image and the image associated with the geolocationally-defined physical area match. The steps are performed on a suitably-programmed mobile device.

A still further embodiment provides a computer-implemented method for tying an image to a physical locality in a user-performable activity scenario. A set of instructions on a mobile device is maintained for an activity scenario that comprises a plurality of pairs of images associated with geolocationally-defined physical areas. An image captured on the mobile device by a user is received. Geolocational coordinates is determined for a physical location of the captured image. The determined geolocational coordinates and the captured image are compared respectively against one or more of the pairs of images and at least one of the geolocationally-defined physical areas. One of the instructions is transmitted for the activity scenario when the determined geolocational coordinates are located within the geolocationally-defined physical area and the captured image matches the image associated with the geolocationally-defined physical area. The steps are

The application also extends to the following numbered statements:
1. A computer-implemented method (40) for tying an image to a physical locality in a user-performable activity scenario, comprising the steps of:
   providing instructions to a mobile device (12, 30) for an activity scenario that comprises a plurality of pairs of images associated with geolocationally-defined physical areas (13);
   identifying a location of a user (11) associated with the mobile device (12, 30) within one of the geolocationally-defined physical areas (13);
   receiving an image captured on the mobile device (12, 30) by the user (11);
   matching the received image against the image associated with the geolocationally-defined physical area (13) of the identified location; and
   transmitting one of the instructions for the activity scenario when the received image and the image associated with the geolocationally-defined physical area (13) match,
   wherein the steps are performed on a suitably-programmed mobile device (12, 30).
2. A method (40) according to statement 1, further comprising:
   awarding an incentive to the user (11) upon satisfactory completion of the instructions in the activity scenario.
3. A method (40) according to statement 1 or statement 2, wherein the awarded incentive comprises virtual contents in a geospatial activity.
4. A method (40) according to anyone of statements 1 to 3, further comprising:
   reading the received image through an image recognizer provided with the mobile device (12, 30); and
   processing the received image when the received image satisfies a minimum image recognition threshold.
5. A method (40) according to any one of statements 1 to 4, further comprising:
   specifying at least a portion of the instructions in a fixed sequence; and
   requiring the instructions to be fulfilled in the fixed sequence.
6. A computer-implemented method (40) for tying an image to a physical locality in a user-performable activity scenario, comprising the steps of:
   maintaining a set of instructions on a mobile device (12, 30) for an activity scenario that comprises a plurality of pairs of images associated with geolocationally-defined physical areas (13);
   receiving an image captured on the mobile device (12, 30) by a user (11);
   determining geolocational coordinates for a physical location of the captured image;
   comparing the determined geolocational coordinates and the captured image respectively against one or more of the pairs of images and at least one of the geolocationally-defined physical areas (13); and
   transmitting one of the instructions for the activity scenario when the determined geolocational coordinates are located within the geolocationally-defined physical area (13) and the captured image matches the image associated with the geolocationally-defined physical area (13),
   wherein the steps are performed on a suitably-programmed mobile device (12, 30).
7. A method (40) according to statement 6, further comprising:
   awarding an incentive to the user (11) upon satisfactory completion of the instructions in the activity scenario.
8. A method (40) according to statement 6 or 7, wherein the awarded incentive comprises virtual contents in a geospatial activity.
9. A method (40) according to statement 6, 7 or 8, further comprising:
   reading the received image through an image recognizer provided with the mobile device (12, 30); and
   processing the received image when the received image satisfies a minimum image recognition threshold.
10. A method (40) according to anyone of statements 6 to 9, further comprising:
   specifying at least a portion of the instructions in a fixed sequence; and
   requiring the instructions to be fulfilled in the fixed sequence.

Still other embodiments of the present invention will become readily apparent to those skilled in the art from the following detailed description, wherein is described embodiments of the invention by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

### Brief Description of the Drawings

FIGURE 1 is a block diagram showing a computer-implemented system for tying symbolic content to a physical locality in a user-performable activity scenario, in accordance with one embodiment.
FIGURE 2 is a block diagram showing, by way of example, a mobile computing device for use in the system of FIGURE 1.
FIGURE 3 is a flow diagram showing a computer-implemented method for tying symbolic content to a physical locality in a user-performable activity scenario, in accordance with one embodiment.
FIGURE 4 is a flow diagram showing a routine for executing a script for an activity scenario for use in the method of FIGURE 3.
FIGURE 5 is a flow diagram showing a routine for determining fulfillment of an instruction for use in the routine of FIGURE 4.

### Detailed Description

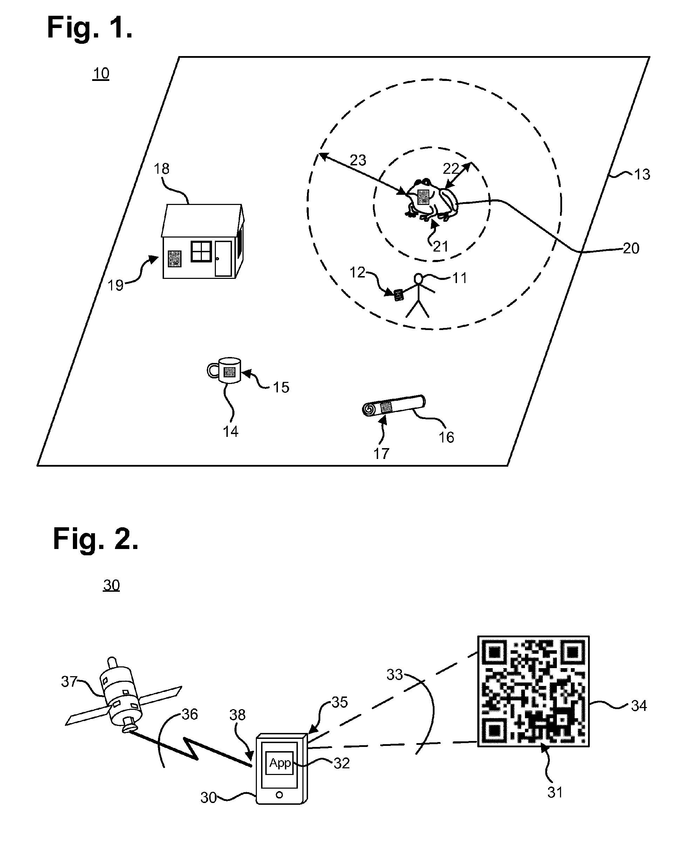

Users of smart phones and similar mobile computing devices can execute scripts that define activity scenario that combine encodings of symbolic content, such as QR or bar codes or RFID tags, with knowledge of the user's real world physical location. For a company interested in promoting their goods and services, activity scenarios enable consumers to participate in promotional events that involve real world inputs and, as a result, become more actively involved with the company's products and services than could be realized through conventional single media channel efforts. FIGURE 1 is a block diagram showing a computer-implemented system 10 for tying symbolic content to a physical locality in a user-performable activity scenario, in accordance with one embodiment. The method 40 can be implemented in software, such as applications and scripts, and execution of the software can be performed on a mobile computing device 12, such as described *infra,* as a series of process or method modules or steps.

An activity scenario is a computer-executable script that is written in a programming language, such as the Extensible Markup Language (XML), which can be downloaded and executed by an application running on a mobile computing device 12, such as described in commonly-assigned U.S. Patent No. 6,691,032 to Irish et al., the disclosure of which is incorporated by reference. Other forms of activity scenarios and computer-executable scripts are possible. The activity scenario includes a sequence of user-performable written instructions that are displayed to the user 11 of the mobile computing device 12, and the user 11 is expected to follow the instructions to eventually be awarded with an incentive or other indication of satisfactory completion of the activity scenario. The user 11 interacts with the mobile computing device 12, which, as appropriate, confirms the satisfactory completion of each written instruction.

To challenge the user 11 with more than simply following directions, the written instructions in the activity scenario include at least one requirement that calls for both a presence of the mobile computing device 12, and therefore, the user 11, within an enclosed physical space 13, such as determined by geolocational coordinates, and an acquisition of readable symbolic content by the mobile computing device 12, for instance, as embedded in a QR or bar code or transmitted from a radio frequency identification (RFID) tag, while also within the enclosed physical space 13.

A requirement thus ties symbolic content to a physical locality, both of which must be achieved for the requirement to be satisfied. A requirement could be made in a written instruction in an activity scenario that required the user to obtain a set of encoded symbolic content, such as reading a QR code off of the identification badges of participants at a conference. A series of requirements could be defined in an activity scenario that require the user to travel to or within predetermined physical localities while collecting and acquiring encoded symbolic content. For example, a walking tour of a neighborhood or tourist attraction can be created through an activity scenario that provides written instructions telling the user where to go. Embedded symbolic content that the user acquires along the way can be used to confirm his location and also to instill interest in getting the user more involved. Requirements can also be used as surrogates for physical objects used in conventional movement-oriented activities, for instance, geocaching, such as described in commonly-assigned U.S. Patent No. 6,691,032 to Irish et al., the disclosure of which is incorporated by reference, where the acquisition of encoded symbolic content constitutes a discovery event of a geocache.

The enclosed physical space 13 can also be further defined to include subspaces 22, 23, such as radii extending outwardly from a known fixed location, as well as adjacent, overlapping or super spaces relative to the enclosed physical space 13. The accompanying written instructions can use the subspaces 22, 23 (or other spaces) to provide clues to the user 11 that hint at the closeness to or distance from a physical objective. For example, upon entering subspace 23, a written instruction can tell the user 12 that he is getting closer to an object 20 (a frog statue) and later, upon entering subspace 22, a further written instruction can advise that he is even closer to the object 20. In a further embodiment, a listing of zones nearest the current location of the mobile computing device can be provided to the user 11 on a display of the mobile computing device for guiding the user to each zone, such as described in commonly-assigned U.S. Patent Application No. 2008/0319656, Serial No. 12/142,691, to Irish, the disclosure of which is incorporated by reference.

The activity scenario enables the user 11 of the mobile computing device 12 to be actively involved in following the written instructions and satisfying the requirements that are included in the activity scenario based on real world inputs, particularly moving around physically and reading or receiving encoded symbolic content. As an example of an activity scenario, a user 11 typically begins by downloading a script for the activity scenario onto his mobile computing device 12, although the script could either be previously downloaded or transferred onto his mobile computing device 12 by some other means, such as removable storage media or peer-to-peer transfer. To start running the script, the user 11 and his mobile computing device 12 must initially be physically located somewhere within the enclosed physical space 13. The enclosed physical space 13 can be defined logically using geolocational coordinates or other positional markers. Alternatively, the enclosed physical space 13 can be defined physically using, for instance, by using the physical boundaries of a city block or park, or the actual confines of the interior of a building, and the user 11 is thus constrained to move only within the physical boundaries. Whether logically- or physically-defined, fulfillment of the written instructions in the activity scenario can only occur when the user 11 and his mobile computing device 12 are present when within the enclosed physical space 13.

The written instructions tell the user 11 what to do and the mobile computing device 12 confirms that the user has followed the written instructions, as appropriate. For instance, a written instruction may tell the user 11 to travel 100 feet to the north of his current position and the mobile computing device 12 determines that the user 11 has indeed moved to where directed based on an updated position as sensed by hardware on the mobile computing device 12, as further described *supra.* The instructions may also require the user to perform a fixed sequence of the instructions as a prerequisite to the satisfactory completion of the activity scenario, and a failure to follow the sequence in the proper order can cause the user 11 to receive warning messages or other feedback from the mobile computing device 12. The fixed sequence could also be timed with completion of the entire activity scenario expected to occur within a set time limit.

The requirements in the instructions may also require the user 11 to receive one or more encodings of symbolic content 19, 21 upon physical command of the user 11 while the mobile computing device 11 (and the user 12) are within or at a predetermined physical location or area. The encodings may be obtained off of stationary objects 18, 20, such as a building or statue, that are located within the enclosed space 13. To validate a requirement for stationary objects, the geolocational coordinates of the mobile computing device 12 must substantially match the known fixed location of each stationary object for the requirement to be met. The requirements in the instructions may alternatively require the user 11 to receive one or more encodings of symbolic content 15, 17 that may be obtained off of non-stationary objects 14, 16, such as a newspaper or coffee cup, that are located at the time of receipt somewhere within the enclosed space 13. To validate a requirement for non-stationary objects, the geolocational coordinates of the mobile computing device 12 can be anywhere within the enclosed space 13 for the requirement to be met, or can be required to match a known fixed location.

The symbolic content can be of various forms. In simplest terms, the symbolic content can specify a Web site or simple textual message for the user to read. In the case of using image recognition to receive encoded symbolic content, the application can trigger an internal event to occur within the activity scenario when a captured image satisfies the minimum image recognition threshold. Thus, the subject matter of the captured image is itself the "encoding" of the symbolic content, that is, the subject matter serves as the representation of the symbolic content in the form of a single "encoding." The symbolic content, however, need not originate with the promoter of the activity scenario. Symbolic content provided by third parties could be used or "co-opted" for purposes of performing the activity scenario. For instance, many manufacturers print QR and bar codes on the labels of their products. Bar codes generally contain a product number used for inventory and point-of-sale scanning. QR codes, however, are generally consumer-oriented and are printed by manufacturers with the intention that consumers will read them using their mobile computing devices. Often, those QR codes merely contain a Web site that is published by the manufacturer at which a consumer can learn more about the product as a form of advertising or product promotion. However, for purposes of an activity scenario, that manufacturer-provided QR code (or bar code) could be used as a trigger for an internal event to occur within the activity scenario, whereby instead of serving the Web page that is encoded in the QR code to the user, the application being executed by the mobile computing device instead displays a specific written instruction to the user based on that QR code having been read. As a result, the activity scenario is not dependent upon the author of the activity scenario having provided specific encoded symbolic content in the physical locality in which the activity scenario is to be performed. Rather, any available encoded symbolic content can be used, provided the correct associations are made within the written instructions and requirements of the activity scenario.

The symbolic content can be used in several ways to validate that a requirement in the written instructions has been satisfied. In basic form, having acquired the encoded symbolic content in a physical locality specified in the written instructions will be sufficient to satisfy the requirement. In that case, the symbolic content only serves as a token that represents that the encoded symbolic content has been acquired by the user of the mobile computing device. In a further embodiment, the symbolic content could be used as a trigger for an event, such as generating a question-and-answer challenge to the user. For example, the written instructions may require the user to answer a question. To answer the question, the application generates a hash of the symbolic content, which is compared to the correct answer that, for security reasons, is stored by the application in encrypted form. If the hash and encrypted answer match and the location of the mobile computing device is correct, the requirement of the written instructions is satisfied and validated.

The requirements in an activity scenario can be defined to require various combinations of physical presence of the user 11 and his mobile computing device 12 and acquisition of encoded symbolic content from a stationary or non-stationary object. For instance, in the simplest case, a single encoding of symbolic content can be associated with separate physical locations or areas, and the user 11 must respectively travel to or be within each of the locations or areas and obtain the symbolic content encoding that is associated with that location or area. As well, a single encoding of symbolic content can be associated with several distinct physical locations or areas, which implies that a different requirement will be needed for each location or area, such as where the user 11 is expected to travel around to different points while in possession of the single symbolic content encoding. Alternatively, different symbolic content encodings could be required for a single physical location or area and a different requirement will be needed for each different encoding. Finally, different symbolic content encodings could be associated with several physical locations or areas. Thus, the user 11 can choose from several acceptable symbolic content encodings at each location or area. Still other combinations of physical locations and areas and symbolic content encodings are possible.

Encoded symbolic content, as read or received from a stationary or non-stationary object, can act as a digital object. A digital object is a programmatic construct that is internally recognized by the application executing on the mobile computing device 12 as a virtual representation of a physical object, although the physical object need not be real world and could be a make-believe object. Through the application, the user 11 can perform actions with digital objects, such as collecting, trading, and tracing or tracking. To collect a digital object, the user 11 must acquire encoded symbolic content, such as by reading a QR code or receiving an NFC or RFID tag using his mobile computing device 12, while at a correct physical location. The activity scenario includes a written instruction that associates predefined symbolic content with the digital object and includes the action of collecting the digital object, as an action that can be performed by the user 11. Once collected, the user 11 can trade the digital object with other users by transferring the digital object from his mobile computing device 12 to the receiving user's mobile computing device. The transfer can either be direct, from device to device, or indirect, such as through an intermediary server. Finally, a collected digital object can be traced or tracked as the object is transferred from one device to another. The tracing or tracking occurs through a centralized server that is in communication with each mobile computing device that comes into possession of the digital object. Still other actions that can be performed on digital objects are possible.

The user must have a mobile computing device to execute a script for an activity scenario. FIGURE 2 is a block diagram showing, by way of example, a mobile computing device 30 for use in the system 10 of FIGURE 1. The mobile computing device 30 can be a smart phone, tablet, netbook or notebook computer, GPS receiver, portable media player, personal data assistant (PDA), or any other type of portable computing device with the ability to execute computer-executable scripts for an activity scenario. The ability to execute scripts may be an integral feature of the mobile computing device 30 or an application 32 ("App") that is implemented through software, firmware, or hardware for execution locally onboard the mobile computing device 30.

In addition, the written instructions require at least one set of real world inputs, which will typically be the location of the mobile computing device 30 as determined through geolocational or other positional markers. The mobile computing device 30 must have the abilities to both ascertain the physical location of the mobile computing device 30 and concurrently acquire encoded symbolic content 31 from either stationary or non-stationary objects. The location of the mobile computing device 30 is determined by receiving geolocational coordinates or other positional markers (Step 36) that can be electronically ascertained by or with the assistance of, for instance, a built-in GPS receiver 38 that is capable of receiving GPS satellite geolocational data 37 or Wi-Fi location positioning software executing on the mobile computing device 30 that uses Wi-Fi access point information to closely estimate physical location as an indirect measurement of physical location. In a further embodiment, the geolocational data can be physically input by the user, such as described in commonly-assigned U.S. Patent Application No. 2008/0319656, Serial No. 12/142,691, to Irish, the disclosure of which is incorporated by reference. Other means of determining the physical location of the mobile computing device 30 are possible.

Symbolic content 34 is acquired using an input capability 35 (Step 33) integral to or working in conjunction with the mobile computing device 30. Increasingly, mobile computer devices 30 are equipped with a built in digital camera that can read visually-detectable encodings, such as QR codes, through an image sensor. When combined with onboard software, the encoded symbolic content can be interpreted by the mobile computing device 30 and provided to the application executing the activity scenario as input. Alternatively, the visually-detectable encodings may be in the form of a physical object, such as a statue, which is captured as an image by the mobile computing device's built in digital camera and processed using image recognition software. Correct acquisition of the encoded symbolic content can be conditioned on achieving a minimum level of image recognition accuracy. Mobile computing devices 30 are also beginning to include near field communications (NFC) and similar RFID-receiving capabilities that allow communications between a mobile computing device 30 and an unpowered NFC or RFID tag that encodes the symbolic content in a non-transitory radio frequency signal. Similar to visually-detectable encodings, the encoded symbolic content can be interpreted by the mobile computing device 30 and provided to the application executing the activity scenario as input. An activity scenario can also use different types of encoded symbolic content, some of which may be visually-detectable encodings while others may be non-transitory radio frequency signals or in other forms. In a further embodiment, symbolic content 34 can be tied to the Service Set Identifier (SSID) of a Wi-Fi access point, the access point's MAC address, or both. MAC addresses are always unique and can serve to uniquely identify a particular known location. On the other hand, SSIDs are not required to be unique, but when combined with the general estimated location of a Wi-Fi access point, an SSID can also serve to uniquely identify a particular known location. In a still further embodiment, an SSID can also serve to merely identify the presence of a user at a Wi-Fi access point belonging to a class of Wi-Fi access points, such as Wi-Fi access points operated by a chain of coffee houses or supermarkets that use the same SSID at all their locations. An application executing the activity scenario can then automatically provide the symbolic content 34 as an input upon encountering a recognized MAC address or SSID. Other means of ascertaining the non-transitory encoding of symbolic content 34 with the mobile computing device 30 are possible.

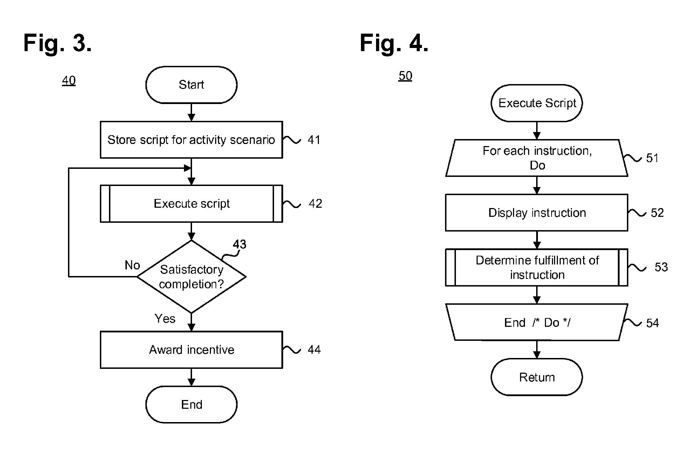

The script is executed by the mobile computing device 30 to enable a user to perform and follow the written instructions in an activity scenario. FIGURE 3 is a flow diagram showing a computer-implemented method 40 for tying symbolic content to a physical locality in a user-performable activity scenario, in accordance with one embodiment. The method 40 can be implemented in software, such as through an application 32, and execution of the software can be performed on a mobile computing device 30, such as described *supra* with reference to FIGURE 2, as a series of process or method modules or steps.

Initially, a computer-executable script for an activity scenario is stored on a mobile computing device (Step 41). The script is then executed (Step 42), as further described below with reference to FIGURE 4. Upon satisfactory completion of the activity scenario (Step 43), as confirmed by the mobile computing device 30, an incentive or other indication of satisfactory completion of the activity scenario is awarded to the user (Step 44). Satisfactory completion can be achieved by meeting the requirements defined in the activity scenario, as well as any other conditions for completion. The incentive could be, for example, permission to access a private collection of caches used in a geospatial activity, which can only be unlocked if the activity scenario has been completed.

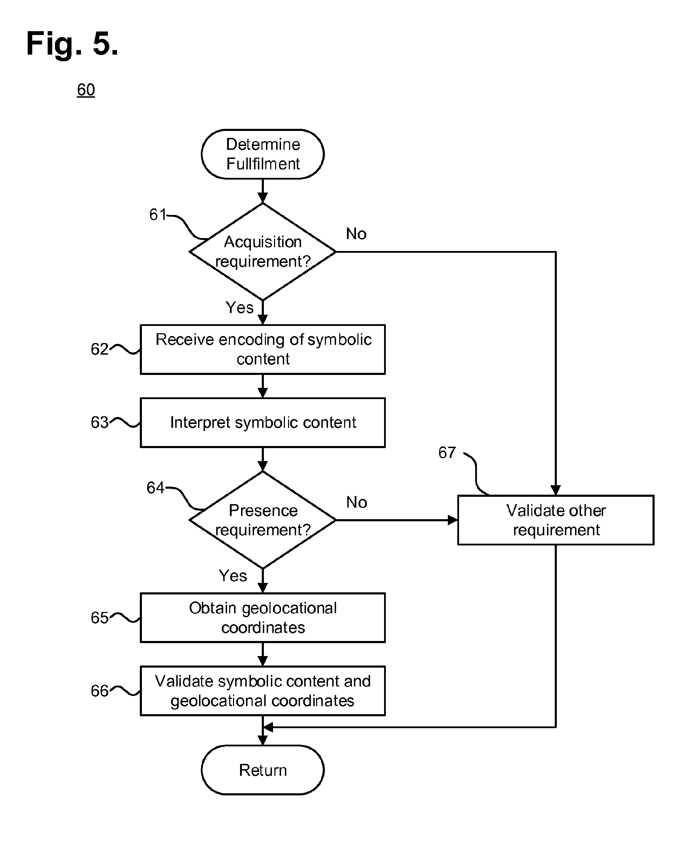

Execution of a script for an activity scenario involves physical activity and real world inputs from the user. FIGURE 4 is a flow diagram showing a routine 50 for executing a script for an activity scenario for use in the method 40 of FIGURE 3. Each instruction in the script is processed (Steps 51-54), as follows. First, the instruction is displayed to the user on the mobile computing device 30 (Step 52), as appropriate. Not every instruction in the script will necessarily be displayed; only those instructions that are needed for directing the actions of the user are displayed. Fulfillment of the instruction is determined (Step 53), as further described below with reference to FIGURE 5. Fulfillment might be, for instance, conditioned upon satisfying a requirement for the presence of the mobile computing device within a physical area and the concurrent acquisition of encoded symbolic content. Other types of instructions requiring fulfillment are possible, including requiring only either a physical presence or the acquisition of encoded symbolic content.

Written instructions that tie the reading or receiving of encoded symbolic content with a particular physical location or area are evaluated in two parts. FIGURE 5 is a flow diagram showing a routine for determining fulfillment of an instruction for use in the routine 40 of FIGURE 4. If the instruction requires that the user read or receive an encoding of symbolic content, such as respectively provided in a QR code or NFC or RFID tag (Step 61), the user must perform an action using the mobile computing device to actually receive the encoded symbolic content (Step 62). For example, a QR code must be read into the mobile computing device by capturing an image of the QR code using the image sensor of a built in digital camera. Alternatively, the mobile computing device may need to be "tapped" or otherwise operated to receive a non-transitory radio frequency signal from an unpowered NFC or RFID tag. Other ways to cause the mobile computing device to acquire encoded symbolic content are possible. Once acquired, the symbolic content is interpreted by the application being executed by the mobile computing device (Step 63). The manner of interpreting the symbolic content depends upon the form of the data. A QR code, for example, must be read by a QR code reading program to decipher the data encoded in the QR code. On the other hand, a NFC or RFID tag will be converted into a bitwise representation by the underlying radio frequency receiver hardware.

If the instruction also requires that the user be present at a particular physical location or area (Step 64), geolocational or other positional markers are obtained respectively using a GPS receiver or Wi-Fi location positioning software executing on the mobile computing device (Step 64), or, if application, geolocational hardware that is connected to the mobile computing device. Once obtained, the geolocational coordinates of the mobile computing device and the acquisition of the correct symbolic content are validated (Step 66), which will signify the satisfactory completion of the instruction's requirement. Other requirements are also possible, which the application will validate as appropriate (Step 67).

In one form, the activity scenario is stored and executed on the mobile computing device as a stand-alone application. The predetermined physical locations or areas and the encoded symbolic content that must be acquired are all maintained and validated by the mobile computing device. In a further embodiment, the mobile computing device works in conjunction with a centralized server with which the mobile computing device can be remotely interfaced. The centralized server keeps track of where the mobile computing device has been using, for instance, geolocational or location positioning data as provided by the mobile computing device. The server also tallies what encoded symbolic content has been acquired by the mobile computing device and, when all of the requirements in the written instructions have been met and validated, confirms successful completion of the activity scenario. This server-centric implementation enables multiple users to compete against one another while the server centrally monitors and evaluates their progress. In a still further embodiment, a combination of mobile computing device and centralized server functionality could be provided, such as where the mobile computing device uses a local database of physical localities and symbolic content encodings that are incrementally reported back to the server as execution of the activity scenario progresses. Still other combinations of device functionality, including peer-to-peer interactivity, are possible.

## Claims

1. A computer-implemented method (40) for tying symbolic content to a physical locality in a user-performable activity scenario,
comprising the steps of:
storing a computer-executable script for an activity scenario that comprises a plurality of user-performable written instructions and at least one requirement within the instructions, the at least one requirement comprising both a presence of a mobile device (12, 30) and an acquisition of readable symbolic content (15, 17, 19, 21, 34) by the mobile device (12, 30) while both within a geolocationally-defined physical area (13);
executing the computer-executable script on the mobile device (12, 30) by displaying the written instructions in the activity scenario to a user (11) and determining fulfillment of the written instructions by the user (11), further comprising:
receiving a non-transitory encoding of symbolic content (15, 17, 19, 21, 34) with the mobile device (12, 30) upon physical command of the user (11) and interpreting the symbolic content (15, 17, 19, 21, 34) from the received non-transitory encoding;
obtaining geolocational coordinates using the mobile device (12, 30) for a physical location at which the encoding was acquired; and
validating the geolocational coordinates and the interpreted symbolic content (15, 17, 19, 21, 34) respectively against the geolocationally-defined physical area (13) and the readable symbolic content (15, 17, 19, 21, 34) that are both comprised in the at least one requirement; and
upon satisfactory completion the written instructions in the activity scenario, as confirmed by the mobile device (12, 30), awarding an incentive to the user (11),
wherein the steps are performed on a suitably-programmed mobile device (12, 30).

2. A method (40) according to Claim 1, further comprising:
obtaining the encoding off of a stationary object (18, 20) that is located at a known physical location within the geolocationally-defined physical area (13); and
requiring that the geolocational coordinates substantially match the known physical location of the stationary object (18, 20).

3. A method (40) according to Claim 1, further comprising:
obtaining the encoding off of a non-stationary object (14, 16) that is located within the geolocationally-defined physical area (13); and
allowing the geolocational coordinates to be anywhere within the geolocationally-defined physical area (13).

4. A method (40) according to Claim 1, further comprising:
specifying the geolocationally-defined physical area (13) as a known fixed location; and
requiring that the geolocational coordinates substantially match the known fixed location.

5. A method (40) according to Claim 1, further comprising:
directly determining the geolocational coordinates using the mobile device (12, 30) for the physical location based on a unique identifier for an access point.

6. A method (40) according to Claim 5, further comprising:
providing the non-transitory encoding of the symbolic content (15, 17, 19, 21, 34) upon recognizing the geolocational coordinates.

7. A method (40) according to any preceding claim, further comprising:
indirectly measuring the geolocational coordinates using the mobile device (12, 30) for the physical location based on a closely estimated physical location for an access point.

8. A method (40) according to Claim 7, further comprising:
combining the closely estimated physical location with a position identification to determine the physical location; and
providing the non-transitory encoding of the symbolic content (15, 17, 19, 21, 34) upon recognizing the physical identification.

9. A method (40) according to any preceding claim, further comprising at least one of:
encoding the symbolic content (15, 17, 19, 21, 34) as a visually-detectable non-transitory encoding and reading the visually-detectable non-transitory encoding through an image sensor provided with the mobile device (12, 30); and
encoding the symbolic content (15, 17, 19, 21, 34) in a non-transitory radio frequency signal and receiving the non-transitory radio frequency signal through a radio transceiver provided with the mobile device (12, 30).

10. A method (40) according to any preceding claim, further comprising:
specifying a plurality of the requirements within the instructions, each of the requirements comprising acquisition of readable symbolic content (15, 17, 19, 21, 34) that is different than any of the other requirements.

11. A method (40) according to any preceding claim, further comprising at least one of:
specifying a plurality of the written instructions in a fixed sequence and requiring that the written instructions be fulfilled in the fixed sequence as a prerequisite to the satisfactory completion; and
specifying a plurality of the written instructions comprising at least one of the written instructions subject to a time limit for completion and requiring that the time limit be satisfied as a prerequisite to the satisfactory completion.

12. A method (40) according to any preceding claim, further comprising:
defining at least one written instruction as comprising collecting a virtual object;
associating the readable symbolic content (15, 17, 19, 21, 34) with the virtual object; and
requiring that the virtual object be collected as a prerequisite to the satisfactory completion.

13. A method (40) according to Claim 12, further comprising at least one of:
defining at least one further written instruction as comprising trading the virtual object and allowing the virtual object to be transferred via the user's (11) mobile device (12, 30) to the mobile device (12, 30) of another user; and
defining at least one further written instruction as comprising tracing the virtual object and allowing the trading of the virtual object to be tracked as the virtual object is transferred between the mobile device (12, 30) of other users.

14. A computer-implemented method (40) for tying an image to a physical locality in a user-performable activity scenario, comprising the steps of:
providing instructions to a mobile device (12, 30) for an activity scenario that comprises a plurality of pairs of images associated with geolocationally-defined physical areas (13);
identifying a location of a user (11) associated with the mobile device (12, 30) within one of the geolocationally-defined physical areas (13);
receiving an image captured on the mobile device (12, 30) by the user (11);
matching the received image against the image associated with the geolocationally-defined physical area (13) of the identified location; and
transmitting one of the instructions for the activity scenario when the received image and the image associated with the geolocationally-defined physical area (13) match,
wherein the steps are performed on a suitably-programmed mobile device (12, 30).

15. A computer-implemented method (40) for tying an image to a physical locality in a user-performable activity scenario, comprising the steps of:
maintaining a set of instructions on a mobile device (12, 30) for an activity scenario that comprises a plurality of pairs of images associated with geolocationally-defined physical areas (13);
receiving an image captured on the mobile device (12, 30) by a user (11);
determining geolocational coordinates for a physical location of the captured image;
comparing the determined geolocational coordinates and the captured image respectively against one or more of the pairs of images and at least one of the geolocationally-defined physical areas (13); and
transmitting one of the instructions for the activity scenario when the determined geolocational coordinates are located within the geolocationally-defined physical area (13) and the captured image matches the image associated with the geolocationally-defined physical area (13),
wherein the steps are performed on a suitably-programmed mobile device (12, 30).
